Europäisches Patentamt

European Patent Office

Office européen des brevets

(19)

(11) Veröffentlichungsnummer : **0 445 677 B1**

(12) # EUROPÄISCHE PATENTSCHRIFT

(45) Veröffentlichungstag der Patentschrift :
**28.09.94 Patentblatt 94/39**

(51) Int. Cl.$^5$ : **G01N 27/416**

(21) Anmeldenummer : **91103163.1**

(22) Anmeldetag : **02.03.91**

(54) Verfahren und Gerät zur Bestimmung der wasserlöslichen starken Säuren in Luft.

(30) Priorität : **05.03.90 DE 4006852**

(43) Veröffentlichungstag der Anmeldung :
**11.09.91 Patentblatt 91/37**

(45) Bekanntmachung des Hinweises auf die
Patenterteilung :
**28.09.94 Patentblatt 94/39**

(84) Benannte Vertragsstaaten :
**CH FR GB LI SE**

(56) Entgegenhaltungen :
**EP-A- 0 201 776**
**DE-A- 2 457 924**
**DE-A- 3 447 344**

(73) Patentinhaber : **FORSCHUNGSZENTRUM**
**JÜLICH GMBH**
**Wilhelm-Johnen-Strasse**
**D-52425 Jülich (DE)**

(72) Erfinder : **Volz-Thomas, Andreas, Dr.**
**Am Kammerbusch 16**
**W-5140 Erkelenz-Hetzerath (DE)**
Erfinder : **Vetter, Andreas**
**Burgfreiheit**
**W-4050 Mönchengladbach 3 (DE)**
Erfinder : **Gilge, Stefan**
**Gracht 14**
**W-5190 Stolberg (DE)**
Erfinder : **Kley, Dieter, Prof. Dr.**
**Max-Planck-Strasse 10**
**W-5170 Jülich (DE)**

**EP 0 445 677 B1**

**Beschreibung**

Die Erfindung bezieht sich auf ein Verfahren zur Bestimmung der wasserlöslichen starken Säuren in Luft, bei dem die zu analysierende Luftmenge zur Aufnahme der Säuren über eine wäßrige Flüssigkeit geleitet wird. Die Erfindung bezieht sich ferner auf eine Gerät zur Durchführung des Verfahrens mit einer zur Aufnahme der zu analysierenden Luft vorgesehenen Sammelspirale, der ein Gefäß mit Absorptionslösung vorgeschaltet ist.

Atmosphärische Spurenstoffanalytik gewinnt mit der immer problematischer werdenden Luftverschmutzung zunehmend an Bedeutung. Eine wichtige Rolle spielen dabei starke Säuren, wie z.B. Salpetersäure, Schwefelsäure und Salzsäure, die entweder direkt in die Luft emittiert werden oder als Folgeprodukt von Schadstoffemissionen dort entstehen. Wegen ihrer guten Wasserlöslichkeit gelangen die Säuren in den Niederschlag und dissoziieren dort aufgrund ihrer definitionsgemäß großen Dissoziationskonstanten ($K_s$ > 1 mol/1) vollständig in die entsprechenden Anionen und $H_3O^+$. Schließlich gelangen sie mit dem Niederschlag auf den Erdboden (Stichwort "Saurer Regen"). Untersuchungen zur Erfassung der Konzentration der wasserlöslichen starken Säuren in der Luft sind von Bedeutung für die Abschätzung der im Niederschlag auftretenden Acidität. Insbesondere erlaubt die Bestimmung der Konzentration der starken Säuren in der Luft wichtige Rückschlüsse über die Transformation von Schadstoffen und liefert einen Beitrag zur Entwicklung von Strategien zur Verminderung des Säuregehaltes im Regen. Dabei ist die Speziation der einzelnen Säuren nicht so entscheidend, sondern vielmehr die Erfassung der insgesamt in einem Luftvolumen vorhandenen und bei der Aufnahme im Wasser freiwerdenden $H_3O^+$-Ionen. Diese Größe kann als potentielle Acidität bezeichnet werden.

Um Spurenstoffe bestimmen und überwachen zu können, kommt es nicht nur darauf an, daß die Meßverfahren hinreichend genau sind. Sie sollen auch, um ihren kostengünstigen Einsatz beispielsweise in Meßfahrzeugen zu ermöglichen, einfach sein bzw. mit einfachem Gerät durchführbar sein. Dies gilt in dem hier vorliegenden Falle besonders, da die Untersuchungen auch in höheren Bereichen der Atmosphäre durchzuführen sind, wobei es wünschenswert ist, das Meßgerät als Ballonsonde einsetzen zu können.

Ein derzeit bekanntes Meßverfahren zur Erfassung von Säuren in Luft ist das der Ionenchromatographie (JP 1-41 858 (A), JP 1-41 857 (A)). Mit dieser Chromatographiemethode werden jedoch nur spezielle Anionen gemessen, so daß nicht alle in der Luft enthaltenen, relevanten Säurereste erfaßt werden. Da zudem die Anionen auch aus neutralen Salzen, wie beispielsweise NaCl, $Na_2SO_4$ u.ä. stammen können, ist dieses Verfahren zur kontinuierlichen Bestimmung und Überwachung der Säuren in Luft nicht hinreichend genau.

Ein weiteres Nachweisprinzip zur Bestimmung von Säuren in Luft ist deren Lösung in Flüssigkeit, dessen Säuregehalt mittels einer pH-Elektrode bestimmt wird (JP 63-273 050 A2). Dabei wird allerdings das in der Luft enthaltene und ebenfalls als Säure reagierende Kohlendioxid mitbestimmt, so daß die Analyse der nur in Spuren auftretenden starken Säuren in Luft verfälscht wird. Zudem werden bei diesem Nachweisprinzip für eine kontinuierliche Messung die in der Lösung enthaltenen Säuren coulometrisch entfernt, was eine sehr aufwendige Steuer- und Regelungstechnik erfordert. Da gleichzeitig die Meßanordnung und das Meßprinzip eine relativ lang andauernde Responsezeit bedingen, ist diese Methode für Flug- oder Ballonsätze ungeeignet.

Insgesamt beziehen sich die derzeit bekannten Meßverfahren zur Erfassung von Säuren in Luft auf die Erfassung einzelner Komponenten und/oder erfordern einen hohen instrumentellen sowie zeitlichen Aufwand, so daß sie nur am Boden oder allenfalls in Flugzeugen und an Großballons einsetzbar sind. Die bekannten einfachen Meßverfahren zur Bestimmung der Acidität werden nur diskontinuierlich zur Analyse des schon gefallenen Niederschlags eingesetzt.

Es ist daher Aufgabe der Erfindung, ein Meßverfahren der eingangs bezeichneten Art zu schaffen, das einfach und dennoch hinreichend empfindlich und genau ist und das die Verwendung eines kostengünstigen Gerätes erlaubt. Es ist ferner Aufgabe der Erfindung, ein solches Gerät zu schaffen.

Diese Aufgabe wird erfindungsgemäß durch ein Verfahren mit den Verfahrensmaßnahmen gemäß Anspruch 1 gelöst.

Die zu analysierende Luft wird zunächst in bekannter Weise über eine wäßrige Flüssigkeitsschicht geleitet, wozu beispielsweise eine Sammelspirale eingesetzt werden kann. Diese ist so bemessen, daß die zu analysierenden Säuren praktisch vollständig (zu 99 %) von der Flüssigkeit aufgenommen werden. Anschließend werden die Luft und die Lösung getrennt, beispielsweise in einem Gasabscheider. In der wäßrigen Lösung dissoziieren die starken Säuren gemäß Reaktion $R_1$ in bekannter Weise vollständig in ihre Anionen und $H_3O^+$-Ionen. Dabei bezeichnet n die Wertigkeit der jeweiligen Säure. Die sich einstellende Konzentration der $H_3O^+$-Ionen wird allgemein als Acidität der Lösung bezeichnet und läßt sich in einfacher und bekannter Weise, zum Beispiel mittels elektrochemischer Verfahren (pH-Einstabmeßkette), bestimmen.

$$R_1 \qquad H_nA + n\,H_2O \rightarrow A^{n-} + n\,H_3O^+$$

Bei der Aufnahme der starken Säuren läßt es sich nicht vermeiden, daß auch das in wesentlich höheren Konzentrationen stets in der Luft vorhandene Kohlendioxid ($CO_2$) zum Teil von der Flüssigkeit aufge-

nommen wird. $CO_2$ ist eine schwache Säure und reagiert mit Wasser zu $HCO_3^-$ und $H_3O^+$, wodurch die Analyse der Säuren gestört wird. Bei einer typischen Konzentration der starken Säuren von 1 ppb (entsprechend $10^{-9}$ Mol Säure/Mol Luft) in der Luft, einer Ansaugleistung von 6 l/min und einem Fluß der wäßrigen Lösung von $10^{-3}$ l/min erreicht man bei nahezu hundertprozentiger Sammeleffizienz eine Acidität in der Lösung von:

$$(6 \text{ l/min}/22{,}4 \text{ l/Mol}) \times 10^{-9} \text{ Mol/Mol} \times 10^3 \text{ min/l} =$$
$$2{,}7 \times 10^{-7} \text{ Mol/l}.$$

Demgegenüber ergibt sich aufgrund des in der Atmosphäre überall in wesentlich höheren Konzentrationen von 350000 ppb vorhandenen $CO_2$, trotz der geringen Löslichkeit von $CO_2$ (die Henrykonstante von $CO_2$ ist $3{,}1 \times 10^{-2}$ Mol/l bar) und seiner gegenüber den starken Säuren wesentlich geringeren Dissoziationskonstanten ($K_{S1} = 4{,}3 \times 10^{-7}$ Mol/l), eine etwa 10 mal höhere Acidität:

$$(3{,}5 \times 10^{-4} \text{ bar} \times 3{,}1 \times 10^{-2} \text{ Mol/l bar} \times 1{,}3 \times 10^{-4}$$
$$\text{Mol/l})^{0{,}5} = 2{,}2 \times 10^{-6} \text{ Mol/l}.$$

Dadurch würde die Analyse der starken Säuren in nicht zulässiger Weise verfälscht.

Der Wert der Erfindung liegt in der Entfernung des störenden $CO_2$ aus der Lösung. Dazu wird die Lösung nach dem Sammelvorgang mit einem $CO_2$-freien Gas in Kontakt gebracht. Dies geschieht zum Beispiel in einer zweiten Spirale, im folgenden Desorptionsspirale genannt, die so zu bemessen ist, daß das in der Lösung vorhandene $HCO_3^-$ und $CO_2$ praktisch vollständig (zu etwa 99 %) aus der Lösung entfernt wird. Die Gasmenge ist ebenfalls so zu bemessen, daß einerseits das in der Lösung vorhandene $HCO_3^-$ und $CO_2$ praktisch vollständig (zu etwa 99 %) aus der Lösung entfernt wird und andererseits die Konzentration der zu analysierenden starken Säuren praktisch nicht (um weniger als 1 %) verändert wird. Zweckmäßigerweise wird als Gas die Analysenluft selbst verwendet, indem sie nach Verlassen des Gasabscheiders 2 über ein Bett aus Kieselgel und Natronkalk geleitet wird, wobei das in der Luft vorhandene $CO_2$ als Carbonat gebunden wird.

Bei optimaler Dimensionierung der Desorptionsspirale und des Gasflusses läßt sich erreichen, daß die noch dem $CO_2$ zuzuschreibende Acidität der Lösung weniger als $3 \times 10^{-3}$ Mol/l, d.h. nur ca. 10 % des Meßwertes, beträgt. Da die atmosphärische $CO_2$-Konzentration um ca. 20 % in beide Richtungen schwankt, verursacht die durch $CO_2$ bedingte Acidität eine Unsicherheit des Meßwertes von etwa 2 %.

Zur Bestimmung der Acidität der Lösung (pH-Wert) bedient man sich zweckmäßigerweise einer Einstabmeßkette mit nachgeschaltetem Meßverstärker. Besonders gut geeignet sind im Handel erhältliche und auf den Betrieb mit strömenden Medien optimierte pH-Meßzellen mit kleinem Volumen (0,5 ml). Um das Signalrauschen der pH-Elektrode zu verringern, wird dem Vorrat der wäßrigen Lösung zweckmäßigerweise ein Leitsalz (z.B. Kaliumchlorid in einer Konzentration von 0,5 Mol/l) zugesetzt.

Es ist zu beachten, daß mitgeführte Gasblasen die pH-Messung stören. Das ungewollte Mitführen von Gasblasen wird zweckmäßigerweise durch die Verwendung eines Blasenabscheiders 9 verhindert.

Die Aufgabe gemäß der Erfindung wird ferner durch ein Gerät der eingangs bezeichneten Art gelöst, das die Merkmale des Anspruchs 2 aufweist. Es weist drei hintereinandergeschaltete Stufen auf und ermöglicht, das Verfahren im Durchfluß zu betreiben.

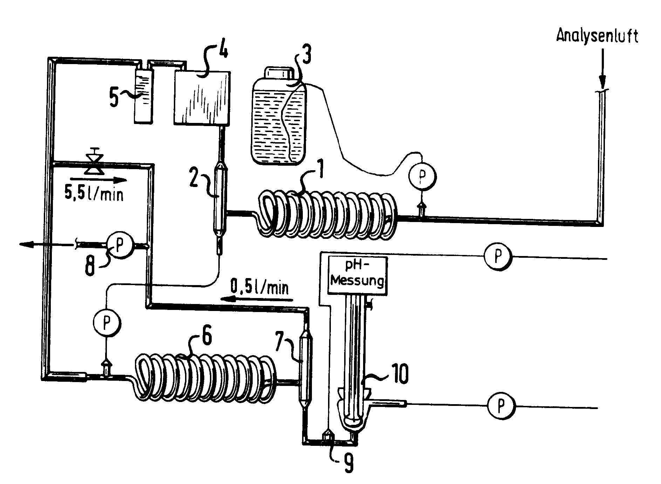

Das Gerät ist in der Zeichnung schematisch dargestellt und wird im folgenden näher erläutert.

Die erste Stufe umfaßt die Sammelspirale 1, den nachgeschalteten Gasabscheider 2 sowie das angeschlossene Vorratsgefäß 3.

Die zu analysierende Luft gelangt in die Sammelspirale 1, wo sie mit der Absorptionslösung, die aus Gefäß 3 eingespeist wird, in Kontakt gebracht wird. Dabei werden die zu analysierenden starken Säuren vollständig gelöst, für das $CO_2$ stellt sich ein Gleichgewicht ein. Die Absorptionslösung und die Luft werden in dem Gasabscheider 2 separiert.

Die zweite Stufe umfaßt die Gasreinigung 4 und 5 sowie die Desorptionsspirale 6 mit nachgeschaltetem Gasabscheider 7.

Die Luft gelangt vom Gasabscheider 2 in die Gasreinigung, bestehend aus einem Bett von Kieselgel und Natronkalk 4 (zur Entfernung des verbliebenen $CO_2$) und einer nachgeschalteten Waschflasche 5 (zur Befeuchtung), wonach sie in die Desorptionsspirale 6 gelangt, wo sie mit der Absorptionslösung, die aus dem Gasabscheider 2 in die Desorptionsspirale 6 geleitet wird, in Kontakt kommt. Die Luft wird über den Gasabscheider 7 von der Lösung getrennt und über die Pumpe 8 abgesaugt.

Die dritte Stufe besteht aus einer Durchflußzelle mit einer Mikroeinstabmeßkette 10 als Meßfühler sowie dem nachgeschalteten Meßverstärker (pH-Meter).

Die Lösung gelangt vom Gasabscheider 7 über einen Blasenabscheider 9, in dem evtl. mitgeführte Gasblasen abgetrennt werden, in die pH-Meßzellen 10, in der der pH-Wert der Lösung bestimmt und daraus in bekannter Weise die $H_3O^+$-Konzentration ermittelt wird.

Die Lösung wird zwischen den einzelnen Teilen des Gerätes durch Schlauchpumpen gefördert, wobei die Fördermenge durch Wahl der Drehzahl der Pumpe, der Durchmesser der Schläuche und deren Anpreßdruck optimiert werden kann.

Die Empfindlichkeit der gesamten Meßapparatur läßt sich in bekannter Weise, z.B. durch Verwendung einer geeichten Säurequelle (Permeationsrohr) bestimmen.

Mit dem beschriebenen Gerät kann das Verfahren beispielsweise wie folgt durchgeführt werden:

a) Sammelvorgang (1. Stufe)

Bei einer Gesamtkonzentration von starken Säuren von 1 ppb (definiert als Mole Säure mal Wertigkeit pro Mol Luft), einer Ansaugleistung von 6 l/min und einem Fluß der Absorptionslösung von $10^{-3}$ l/min erreicht man eine $H_3O^+$-Konzentration in der Absorptionslösung von

$$(6 \text{ l/min}/22,4 \text{ l/Mol}) \times 10^{-9} \text{ Mol/Mol} \times 10^3 \text{ min/l} = 2,7 \times 10^{-7} \text{ Mol/l}$$

Außerdem ergibt sich bei einem Luftdruck von 1 bar aufgrund des in der Atmosphäre in Konzentrationen von 350000 ppb vorhandenen $CO_2$ (Einstellung des Lösungs- und Dissoziationsgleichgewichts; Löslichkeit von $CO_2$ $3,1 \times 10^{-2}$ Mol/l bar und Dissoziationskonstante $K_{S1} = 4,3 \times 10^{-7}$ Mol/l) eine $H_3O^+$-Konzentration von

$$(3,5 \times 10^{-4} \text{ bar Mol/Mol} \times 3,1 \times 10^{-2} \text{ Mol/l bar} \times 4,3 \times 10^{-7} \text{ Mol/l})^{0.5} = 2,2 \times 10^{-6} \text{ Mol/l}.$$

Die Konzentration an gelöstem $HCO_3$ ist ebenfalls etwa $2,2 \times 10^{-6}$ Mol/l (die weitere Dissoziation zum $CO_3^{2-}$ ist unter den Bedingungen vernachlässigbar; $K_{2S} = 5,6 \times 10^{-11}$ Mol/l) und die Konzentration des gelösten $CO_2$ beträgt

$$3,5 \times 10^{-4} \text{ bar Mol/Mol} \times 3,1 \times 10^{-2} \text{ Mol/l bar} = 1,1 \times 10^{-5} \text{ Mol/l}.$$

Die gasförmige und flüssige Phase werden sodann voneinander im Gasabscheider 2 getrennt.

b) Entfernung des $CO_2$

In der Gasreinigung wird ein Teil der Luft (0,5 l/min) über ein Bett aus Kieselgel und Natronkalk 4 (je ca. 100 g genügen für einen Betrieb von 10 Std.) getrocknet und vollständig (zu mehr als 99 %) vom verbliebenen $CO_2$ befreit. Anschließend wird die $CO_2$-freie Luft in der Waschflasche 7 wieder befeuchtet und gelangt in die Desorptionsspirale 6, wo sie mit der Absorptionslösung, aus dem Gasabscheider 2 kommend, in Kontakt gebracht wird. Dabei geht der überwiegende Teil des gelösten $CO_2$ in die Gasphase über, und entsprechend dem Lösungs- und Dissoziationsgleichgewicht ist die verbleibende, durch $CO_2$ verursachte Acidität der Lösung

$$(1,3 \times 10^{-5} \text{ Mol/l} \times 10^{-3} \text{ l/min} \times 22,4 \text{ l/Mol} \times 3,1 \times 10^{-2} \text{ l/Mol/bar} \times 4,3 \times 10^{-7} \text{ Mol/l}) / (3 \times 10^{-7} \text{ Mol/l} \times 0,5 \text{ l/min}) = 2,6 \times 10^{-8} \text{ Mol/l}.$$

Wegen der natürlichen Schwankungen der atmosphärischen $CO_2$-Konzentration hat dieser Wert eine Unsicherheit von etwa 10 % in beide Richtungen.

c) Bestimmung der Acidität

Die Lösung gelangt über den Gasabscheider 7 und den Blasenabscheider 9 in die pH-Meßzelle 10, in der kontinuierlich die $H_3O^+$-Konzentration bestimmt wird. Im vorliegenden Beispiel wird diese zu mehr als 90 % durch die starken Säuren verursacht.

Die Konzentration der starken Säuren berechnet sich aus der gemessenen Acidität, wobei die je Zeiteinheit angesaugte Luftmenge und der Fluß der Absorptionslösung als Proportionalitätsfaktoren in die Berechnung eingehen. Für hochgenaue Messungen empfiehlt sich daher eine Messung oder Regelung dieser Flüsse in bekannter Weise.

**Patentansprüche**

1. Verfahren zur Bestimmung der wasserlöslichen starken Säuren in Luft, bei dem die zu analysierende Luftmenge zur Aufnahme der Säuren über eine Absorptionslösung (3), wie Wasser, geleitet wird (1),
   **dadurch gekennzeichnet,**
   daß die die Säuren und das die Analyse störende Kohlendioxid ($CO_2$) enthaltende Lösung von der Luft wieder getrennt (2) und sodann mit von $CO_2$ befreiter Luft (4 und 5) in Berührung gebracht wird (6), so daß sie vom $CO_2$ befreit wird, ohne daß die gelösten Säuren dabei entfernt werden, worauf die die gelösten Säuren enthaltende Lösung einer im Durchfluß betriebenen Meßzelle mit pH-Einstabmeßkette (10) mit nachgeschaltetem Meßgerät zugeführt wird, in der die Acidität der Lösung und somit - unter Berücksichtigung der Menge der zu analysierenden Luft und der Menge an Absorptionslösung - die Konzentration an starken Säuren bestimmt und angezeigt wird.

2. Verfahren nach Anspruch 1,
   **dadurch gekennzeichnet,**
   daß zur Entfernung des gelösten $CO_2$ die Analysenluft verwendet wird, indem sie durch eine Packung z.B. aus Kieselgel und Natronkalk (4) geleitet wird, wobei sie von $CO_2$ befreit wird und die Luft anschließend in einer Waschflasche (5) wieder befeuchtet wird.

3. Gerät zur Durchführung des Verfahrens nach Anspruch 1 bestehend aus einer zur Aufnahme der zu analysierenden Luft vorgesehenen Sammelspirale (1), der ein Gefäß (3) mit Absorptionslösung vorgeschaltet ist,
   **gekennzeichnet durch**
   einen der Sammelspirale nachgeschalteten Gasabscheider (2), einer diesem nachgeschalteten, zur Aufnahme von Säuren- und $CO_2$-enthaltender Absorptionslösung sowie von $CO_2$-freier Luft vorgesehenen Desorptionsspirale (6) mit nachgeschaltetem zweiten Gasabscheider (7), und einer dem zweiten Gasabscheider (7) nachgeschalteten, die Acidität der $CO_2$-freien Lösung bestimmenden pH-Meßvorrichtung (10).

4. Gerät nach Anspruch 3,

**gekennzeichnet durch**

einen, dem Gasabscheider (2) zusätzlich nachgeschalteten und der Desorptionsspirale (6) vorgeschalteten Behälter (4) mit $CO_2$-bindendem Reagenz.

## Claims

1. A method of determining water-soluble strong acids in air, wherein the amount of air to be analysed is passed (1) over an absorption solution (3) such as water, for absorption of the acids, characterised in that the solution containing the acids and carbon dioxide ($CO_2$), which interferes with the analysis, is separated (2) from the air again and then brought into contact (6) with air freed from $CO_2$ (4 and 5) so that it is freed from $CO_2$ without the dissolved acids thereby being removed, whereupon the solution containing the dissolved acids is fed to a measuring cell operated with through-flow, which has a pH combination electrode (10) with a measuring device connected downstream, and in which the acidity of the solution and thus - taking into account the amount of air to be analysed and the amount of absorption solution - the concentration of strong acids is determined and indicated.

2. A method according to claim 1, characterised in that the analysis air is used for the removal of the dissolved $CO_2$ in that it is passed through a packing, e.g. of silica gel and soda-lime (4), wherein it is freed from $CO_2$ and the air is subsequently re-humidified in a wash bottle (5).

3. An apparatus for carrying out the method according to claim 1, consisting of a collection spiral (1) provided for the containment of the air to be analysed, upstream of which a vessel (3) with absorption solution is connected, characterised by a gas separator (2) connected downstream of the collection spiral, by a desorption spiral (6) connected downstream of the gas separator and provided for the containment of absorption solution containing acids and $CO_2$ and of $CO_2$-free air and with a second gas separator (7) connected downstream, and by a pH measuring device (10) which is connected downstream of the second gas separator (7) and which determines the acidity of the $CO_2$-free solution.

4. An apparatus according to claim 3, characterised by a container (4), with a reagent which fixes $CO_2$, which is additionally connected downstream of the gas separator (2) and which is connected upstream of the desorption spiral (6).

## Revendications

1. Procédé pour la détermination dans l'air des acides forts solubles dans l'eau, dans lequel la quantité d'air à analyser est amenée au-dessus d'une solution d'absorption (3), comme l'eau, pour l'absorption des acides, caractérisé en ce que la solution contenant les acides et le dioxyde de carbone ($CO_2$) gênant l'analyse est de nouveau séparée (2) de l'air et amenée ensuite au contact d'air débarrassé du $CO_2$ (4 et 5), de sorte qu'elle est débarrassée du $CO_2$ sans que les acides dissous en soient éliminés, après quoi la solution contenant les acides dissous est amenée à une cellule de mesure fonctionnant en continu, comportant une chaîne (10) de mesure de pH à tige graduée unique avec un appareil de mesure monté en aval, où l'acidité de la solution est déterminée et affichée, et donc, en prenant en considération la quantité d'air à analyser, la concentration des acides forts.

2. Procédé selon la revendication 1, caractérisé en ce que, pour l'élimination du $CO_2$ dissous, on utilise l'air analysé en l'amenant dans un garnissage, par exemple formé de gel de silice et de chaux sodée (4), l'air étant débarrassé du $CO_2$ de cette manière, et ensuite, on réhumidifie l'air dans un flacon de lavage (5).

3. Appareil pour la mise en oeuvre du procédé selon la revendication 1, formé d'une spirale collectrice (1) prévue pour recevoir l'air à analyser, en amont de laquelle est monté un récipient (3) avec une solution d'absorption, caractérisé par un séparateur de gaz (2) monté en aval de la spirale collectrice, suivi d'une spirale de désorption (6) prévue pour recevoir la solution d'absorption contenant les acides et du $CO_2$, ainsi que l'air débarrassé du $CO_2$, en aval de laquelle est monté un deuxième séparateur de gaz (7), et un dispositif de mesure de pH (10) déterminant l'acidité de la solution débarrassée du $CO_2$, qui est monté en aval du deuxième séparateur de gaz (7).

4. Appareil selon la revendication 3, caractérisé par un réservoir (4) contenant un réactif fixant le $CO_2$, qui est monté, en plus, en aval du séparateur de gaz (2) et en amont de la spirale de désorption (6).